# EUROPÄISCHE PATENTSCHRIFT

(11) **EP 0 567 850 B1**
(45) Veröffentlichungstag und Bekanntmachung des Hinweises auf die Patenterteilung: **10.09.1997**
(21) Anmeldenummer: 93106059.4
(22) Anmeldetag: 14.04.1993
(51) Int. Cl.: H04M 1/03, H04R 1/06

(54) **Kontaktierung eines innerhalb einer Fernsprechstation angeordneten Lautsprechers mit einer innerhalb der Fernsprechstation vorgesehenen Leiterplatte**
Connection of a loudspeaker with a printed circuit board in a telephone subscriber set
Connexion d'un haut-parleur et d'un circuit imprimé situés tous deux dans un poste téléphonique

(30) Priorität: 28.04.1992 DE 9205698 U
(43) Veröffentlichungstag der Anmeldung: 03.11.1993
(73) Patentinhaber: SIEMENS AKTIENGESELLSCHAFT, 80333 München (DE)
(72) Erfinder: Reuschel, Jürgen, W-4290 Bocholt-Lowick (DE); Müller, Heinz-Dieter, Dipl.-Ing., W-4240 Emmerich (DE); Kroesen, Klaus, Dipl.-Ing., W-4294 Isselburg 2 (DE)

(56) Entgegenhaltungen:
- DE-A- 3 140 746
- DE-A- 3 218 323
- DE-U- 9 016 811
- DE-U- 9 205 698

## Beschreibung

Kontaktierung eines innerhalb einer Fernsprechstation angeordneten Lautsprechers mit auf einer Leiterplatte angeordneten Kontaktfedern

Die vorliegende Erfindung betrifft eine Kontaktierung eines innerhalb einer Fernsprechstation angeordneten und außenliegende Steckkontakte aufweisenden Lautsprechers mit auf einer Leiterplatte angeordneten Kontaktfedern, die mit Kontaktbahnen der Leiterplatte verbunden sind.

Bisher werden in Fernsprechstationen angeordnete Lautsprecher mittels eines zweiadrigen Kabels mit den entsprechenden Kontakten auf der Leiterplatte elektrisch verbunden, wobei das Kabel entweder an beiden Seiten mit Steckschuhen versehen ist, die auf die Kontaktstecker an dem Lautsprecher sowie auf Steckkontakte an der Leiterplatte aufgebracht werden oder jeweils ein Endbereich des Kabels direkt an den Anschlüssen des Lautsprechers angelötet ist.

Diese Verbindungsart erfordert jedoch das Anbringen von zusätzlichen Kontakten auf der Leiterplatte sowie das von Hand durchzuführende Aufstecken der Kabelschuhe.

Bei Kompaktfernsprechern ist eine Kontaktierungsart bekanntgeworden, bei der zur Kontaktierung der im Handapparat angeordneten Sprech- und Hörkapsel Kontaktfedern verwendet werden, die mit einem Steckaufnahmebereich mit den Anschlußzungen der Hör- und Sprechkapsel verbunden sind, während sich der diesem Steckaufnahmebereich gegenüberliegende Federbereich der Kontaktfeder unter Vorspannung an Kontaktflächen einer im Handapparat vorgesehenen Leiterplatte abstützt. Mittels dieser Kontaktfedern sollen zusätzlich die Hör- und Sprechkapsel jeweils akustisch dicht an die Schaltdurchlaßöffnungen des Handapparates angepreßt werden (DE-U-9 016 811).

Durch die DE-A-3 140 746 ist weiterhin eine Hör- oder Sprechkapsel bekannt, die aus einem Grundkörper mit Aussparungen für die Aufnahme von elektrischen Steckkontakten sowie einem Kontaktaufsatz gebildet ist. Der Kontaktaufsatz weist auf seiner einen Seite Kontaktklemmen und auf seiner anderen Seite einen ersten elektrisch leitenden Belag und einen zweiten, vom ersten Belag elektrisch isolierten und ebenfalls elektrisch leitenden Belag auf. Durch diese Gestaltung kann durch einen einfachen Aufsatz eines Zusatzelementes auf einer Kunststoffkapsel die Hör- oder Sprechkapsel mit herkömmlichen Kontaktanschlüssen verbunden werden.

Der vorliegenden Erfindung liegt die Aufgabe zugrunde, eine weitere Kontaktierung für einen innerhalb einer Fernsprechstation angeordneten Lautsprecher mit einer Leiterplatte aufzuzeigen, die einfach und schnell herstellbar ist.

Diese Aufgabe wird dadurch gelöst, daß die jeweilige mit der Leiterplatte verbundene Kontaktfeder aus zwei parallel zur Leiterplatte verlaufenden und miteinander fluchtenden Außenarmen besteht, an die sich jeweils eine sickenartige Ausbuchtung anschließt, die jeweils aus zwei miteinander einen spitzen Winkel bildenden Bereichen besteht, daß die beiden Ausbuchtungen sich linienartig berühren und die eigentliche Steckaufnahme für die am Lautsprecher angeordneten Steckkontakte bilden und daß die beiden Ausbuchtungen über einen in Gegenrichtung verlaufenden Endbereich miteinander verbunden sind.

Die elektrische und mechanische Verbindung der Kontaktfedern mit den für den Lautsprecheranschluß vorgesehenen Kontaktbahnen der Leiterplatte kann hierbei mittels eines Fertigungsautomaten erfolgen. Beim Zusammenbau der Fernsprechstation greifen die an dem Lautsprecher außenliegenden Steckkontakte direkt in die Kontaktfedern ein und stellen die gewünschte elektrische Verbindung des Lautsprechers mit der Leiterplatte her. Die Kontaktverbindung selbst kann aufgrund ihrer konstruktiven Gestaltung mittels eines Fertigungsautomaten hergestellt werden, so daß sich die Herstellungskosten und -zeiten gerade bei Massenprodukten nicht unerheblich reduzieren lassen.

Dabei können die beiden Außenarme zur Verbindung der Kontaktfeder mit den Kontaktbahnen der Leiterplatte verwendet werden. Bei flachgestalteten Armen kann bevorzugt das Reflow-Lötverfahren zur Anwendung gelangen. Werden dagegen die Endbereiche dieser Arme zur Leiterplatte hin abgewinkelt, so besteht die Möglichkeit, diese abgewinkelten Endbereiche der Arme in entsprechende Bohrungen in den Kontaktbahnen der Leiterplatte einzubringen. Die auf diese Weise fixierten Endbereiche der Arme lassen sich mit der Leiterplatte durch Schwallöten verbinden.

Aufgrund der spitzwinklig gestalteten Bereiche der Ausbuchtungen wird eine Steckaufnahme geschaffen, die auch bei geringen seitlichen Verschiebungen der am Lautsprecher angeordneten Steckkontakte zu den auf der Leiterplatte aufgebrachten Kontaktfedern stets ein sicheres Hineinführen der Steckkontakte in den jeweiligen kontaktgebenden Bereich der Kontaktfeder gewährleistet.

Durch den die beiden spitzwinklig ausgebildeten Steckaufnahmebereiche der Ausbuchtungen verbindenden Endbereich wird das Auffedern des kontaktgebenden Bereiches der Kontaktfeder beim Einbringen der Steckkontakte in die Kontaktfeder beeinflußt. Dieser Endbereich kann z. B. in etwa kreisförmig gestaltet sein. Es besteht jedoch auch die Möglichkeit, diesen Bereich dreieckförmig auszubilden, wobei dessen Basis im eingebrachten Zustand der Kontaktfeder parallel zu der Leiterplatte verläuft. Eine derartige Gestaltung des Endbereiches hat den großen Vorteil, daß bei der Bestückung der Leiterplatte mittels eines Automaten diese Basis durch eine mit Unterdruck betriebene Düse angesaugt und damit die Kontaktfeder in ihre für sie bestimmte Lage auf der Leiterplatte positioniert werden kann.

Dabei kann die jeweilige Kontaktfeder so gestaltet sein, daß sie mit ihrem kontaktgebenden Bereich innerhalb eines Durchbruchs der Leiterplatte zu liegen kommt.

Es besteht weiterhin die Möglichkeit, den kontaktgebenden Bereich der Steckaufnahme außerhalb der Leiterplatte anzuordnen. Die Kontaktierung eines außerhalb der Leiterplatte angeordneten Lautsprechers hat den Vorteil, daß durch die die Steckaufnahme bildenden Bereiche der Kontaktfeder geringe Höhendifferenzen zwischen den Steckkontakten am Lautsprecher und der Kontaktfeder selbst ausgeglichen werden können.

Die Erfindung soll im folgenden anhand von Ausführungsbeispielen näher erläutert werden.

Es zeigt
Figur 1 die direkte Kontaktierung eines Lautsprechers mit einer Leiterplatte in einer teilweise geschnittenen Seitenansicht,
Figur 2 eine erste Ausführungsform einer Kontaktfeder in einer Seitenansicht,
Figur 3 die Kontaktfeder nach Figur 2 in einer um 90° gedrehten Ansicht,
Figur 4 eine zweite Ausführungsform einer Kontaktfeder in einer Seitenansicht,
Figur 5 die Kontaktfeder nach Figur 4 in einer um 90° gedrehten Ansicht,
Figur 6 eine dritte Ausführungsform einer Kontaktfeder in einer Seitenansicht,
Figur 7 eine weitere Direktkontaktierung eines Lautsprechers mit einer Leiterplatte.

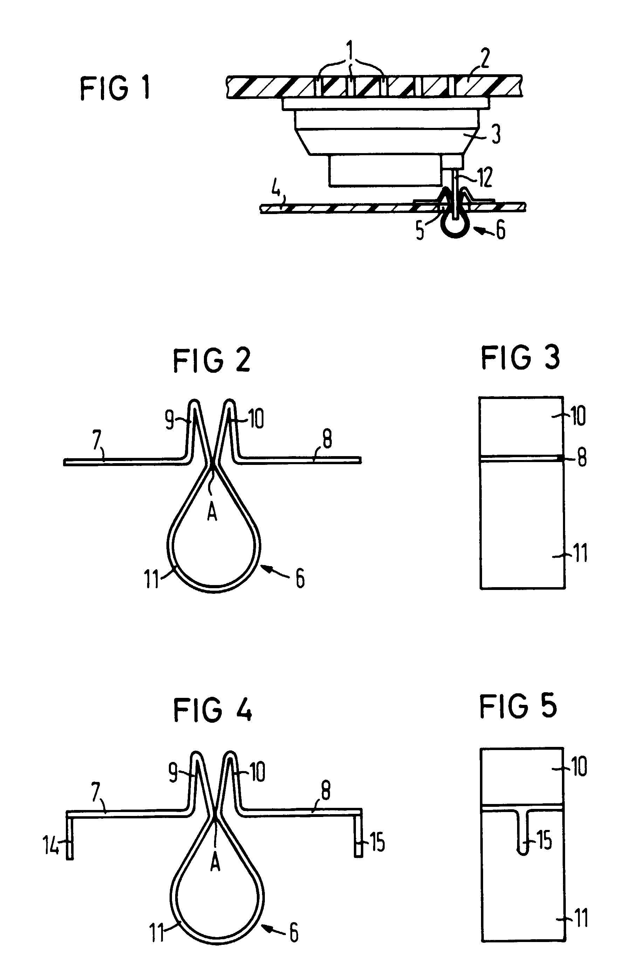

Bei der in Figur 1 dargestellten Ausführungsform soll ein innerhalb eines Schalldurchlaßöffnungen 1 aufweisenden Gehäuses 2 einer hier nicht näher dargestellten Fernsprechstation angeordneter Lautsprecher 3 direkt mit einer Leiterplatte 4 kontaktiert werden. Dies erfolgt durch eine in einen Durchbruch 5 der Leiterplatte 4 eingebrachte Kontaktfeder 6, auf deren Gestaltung noch näher eingegangen werden soll und die mit der Leiterplatte z. B. durch einen Lötvorgang fest verbunden ist.

In den Figuren 2 und 3 ist eine erste Ausführungsform einer Kontaktfeder 6 dargestellt. Diese Kontaktfeder 6 besteht aus zwei sich zur Leiterplatte parallel erstreckenden Armen 7 und 8, an die sich jeweils spitzwinklig abgebogene Bereiche 9 und 10 anschließen, die über einen in etwa kreisförmig gestalteten Endbereich 11 miteinander verbunden sind. Die spitzwinklig abgebogenen Bereiche 9 und 10 sind so gestaltet, daß sie sich linienförmig an der Stelle A berühren und die eigentliche Kontaktstelle für die am Lautsprecher 3 angeordneten Steckkontakte 12 bilden. Dadurch, daß die spitzwinklig gestalteten und zueinander weisenden Bereiche 9 und 10 eine Einführungsschräge für den am Lautsprecher angeordneten Steckkontakt 12 bilden, können einmal Lagetoleranzen des Lautsprechers ausgeglichen werden, zum anderen ist durch diese Gestaltung gewährleistet, daß der am Lautsprecher angeordnete Steckkontakt auch bei seitlich auftretenden geringen Toleranzen stets in seine Kontaktlage geführt wird.

Eine derartig gestaltete Kontaktfeder 6 kann z. B. mit auf der Leiterplatte 4 aufgebrachten Kontaktbahnen mittels des Reflow-Lötverfahrens kontaktiert werden.

In den Figuren 4 und 5 ist eine zweite Ausführungsform einer Kontaktfeder 13 dargestellt. Diese Kontaktfeder ist im wesentlichen wie die in den Figuren 2 und 3 beschriebene Kontaktfeder 6 gestaltet. Die Endbereiche 14 und 15 der Arme 7 und 8 sind bei dieser Kontaktfeder winkelförmig in Richtung auf die Leiterplatte 4 abgebogen. Diese Endbereiche 14 und 15 können in hier nicht näher dargestellte Bohrungen in den ihnen zugeordnete Leiterbahnen der Leiterplatte 4 eingebracht und mittels Schwallöten mit der Leiterplatte 4 befestigt und kontaktiert werden.

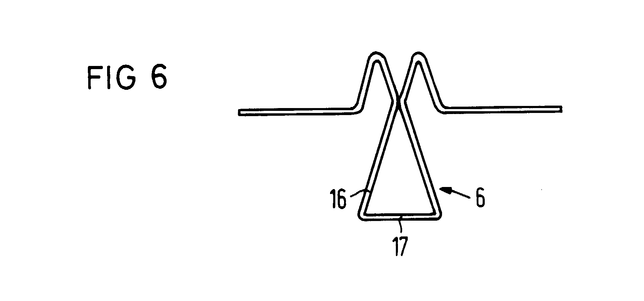

Die Figur 6 stellt eine weitere Variante der Kontaktfeder nach Figur 2 und 3 dar, die mit der Leiterplatte z. B. mittels des Reflow-Lötverfahrens kontaktiert werden kann. Hierbei ist der Endbereich 16 im Gegensatz zu der in Figur 2 gezeigten Ausführungsform (Endbereich 11) dreieckförmig gestaltet, wobei die Basis 17 dieses Endbereichs 16 im befestigten Zustand der Kontaktfeder parallel zu der Leiterplatte 4 verläuft. Bei der Bestückung der Leiterplatte mittels eines Automaten kann die Basis 17 durch eine mit Unterdruck betriebene Düse angesaugt werden, wodurch die Kontaktfeder in ihre für sie vorbestimmte Lage positioniert und anschließend befestigt werden kann.

## Patentansprüche

1. Kontaktierung eines innerhalb einer Fernsprechstation angeordneten und außenliegende Steckkontakte (12) aufweisenden Lautsprechers (3) mit auf einer Leiterplatte (4) angeordneten Kontaktfedern (6), die mit Kontaktbahnen der Leiterplatte (4) verbunden sind, **dadurch gekennzeichnet**, daß die jeweilige mit der Leiterplatte (4) verbundene Kontaktfeder (6) aus zwei parallel zur Leiterplatte verlaufenden und miteinander fluchtenden Außenarmen (7, 8) besteht, an die sich jeweils eine sickenartige Ausbuchtung (9, 10) anschließt, die jeweils aus zwei miteinander einen spitzen Winkel bildenden Bereichen besteht, daß die beiden Ausbuchtungen (9, 10) sich linienartig (A) berühren und die eigentliche Steckaufnahme für die am Lautsprecher (3) angeordneten Steckkontakte (12) bilden und daß die beiden Ausbuchtungen (9, 10) über einen in Gegenrichtung verlaufenden Endbereich (11, 16) miteinander verbunden sind.

2. Kontaktierung nach Anspruch 1, **dadurch gekennzeichnet**, daß die Kontaktfeder (6) mit dem kontaktgebenden Bereich (A) der Ausbuchtungen (9, 10) innerhalb eines Durchbruchs (5) der Leiterplatte (4) angeordnet ist.

3. Kontaktierung nach Anspruch 1, **dadurch gekennzeichnet**, daß der genannte Endbereich (11) in etwa kreisförmig gestaltet ist.

4. Kontaktierung nach Anspruch 1, **dadurch gekennzeichnet**, daß der genannte Endbereich (16) dreieckförmig gestaltet ist, wobei dessen Basis (17) im befestigten Zustand der Kontaktfeder (6) parallel zur Leiterplatte (4) verläuft.

5. Kontaktierung nach Anspruch 1, **dadurch gekennzeichnet**, daß die freien Endbereiche (14, 15) der Außenarme (7, 8) der Kontaktfeder (6) in Richtung auf die Leiterplatte (4) abgewinkelt sind.

## Claims

1. Means of making contact between a loudspeaker (3) which is arranged inside a telephone subscriber station and has plug-type contacts (12) arranged on the outside and contact springs (6) which are arranged on a printed circuit board (4) and are connected to contact tracks of the printed circuit board (4), characterized in that the respective contact spring (6) which is connected to the printed circuit board (4) comprises two outer arms (7, 8) which run parallel to the printed circuit board, are aligned with one another and are each adjoined by a bead-like projection (9, 10) which are each composed of two regions which form an acute angle with one another, in that the two projections (9, 10) are in linear (A) contact and form the actual plug-type receptacle for the plug-type contacts (12) arranged on the loudspeaker (3), and in that the two projections (9, 10) are connected to one another via an end region (11, 16) which runs in the opposite direction.

2. Means of making contact according to Claim 1, characterized in that the contact spring (6) with the contact-forming region (A) of the projections (9, 10) is arranged inside a through-opening (5) of the printed circuit board (4).

3. Means of making contact according to Claim 1, characterized in that the aforesaid end region (11) is of approximately circular design.

4. Means of making contact according to Claim 1, characterized in that the aforesaid end region (16) is of triangular design, its base (17) running parallel to the printed circuit board (4) in the attached state of the contact spring (6).

5. Means of making contact according to Claim 1, characterized in that the free end regions (14, 15) of the outer arms (7, 8) of the contact spring (6) are bent at a right angle in the direction of the printed circuit board (4).

## Revendications

1. Connexion d'un haut-parleur (3) placé à l'intérieur d'un poste téléphonique et comportant des contacts enfichables extérieurs (12) avec des ressorts de contact (6) placés sur un circuit imprimé (4), ces ressorts de contact étant connectés aux pistes conductives du circuit imprimé (4), **caractérisée par** le fait que chaque ressort de contact (6) connecté au circuit imprimé (4) comporte deux bras extérieurs (7, 8) parallèles au circuit imprimé et en alignement l'un sur l'autre, se prolongeant chacun par une courbure (9, 10) formant une sorte de moulure qui se compose de deux zones formant un angle aigu l'une avec l'autre, ces deux courbures (9, 10) se touchant suivant une ligne droite (A) et formant la prise enfichable proprement dite pour les contacts (12) placés sur le haut-parleur (3) et ces deux courbures (9, 10) étant reliées l'une à l'autre par une zone terminale (11, 16) se développant en sens opposé.

2. Connexion conforme à la revendication 1, **caractérisée par** le fait que la partie (A) des courbures (9, 10) du ressort de contact (6) est placée dans une traversée (5) du circuit imprimé (4).

3. Connexion conforme à la revendication 1, **caractérisée par** le fait que la dite zone terminale (11) a une forme approximativement circulaire.

4. Connexion conforme à la revendication 1, **caractérisée par** le fait que la dite zone terminale (16) a une forme triangulaire, la base (17) du triangle étant, dans la position fixée du ressort de contact (6), parallèle au circuit imprimé (4).

5. Connexion conforme à la revendication 1, **caractérisée par** le fait que les extrémités libres (14, 15) des branches extérieures (7, 8) du ressort de contact (6) sont pliées dans la direction du circuit imprimé (4).
